# EUROPÄISCHE PATENTANMELDUNG

(11) **EP 1 609 648 A2**
(43) Veröffentlichungstag der Anmeldung: **28.12.2005**
(21) Anmeldenummer: 05014252.0
(22) Anmeldetag: 16.11.2001
(51) Int. Cl.: B60J 1/20

(54) **Fensterrollo mit Zentriereinrichtung für den Zugstab**

(30) Priorität: 22.11.2000 DE 10057760
(62) Teilanmeldung aus: 01127178.0
(71) Anmelder: BOS GmbH & Co. KG, 73760 Ostfildern (DE)
(72) Erfinder: Schlecht, Werner P., 71665 Vaihingen/Enz (DE); Walter, Herbert, 73061 Ebersbach (DE)
(74) Vertreter: Rüger, Barthelt & Abel Patentanwälte

(57) **Zusammenfassung**

Ein Fensterrollo für Kraftfahrzeuge weist eine drehbar gelagerte Wickelwelle auf, an der mit einer Kante eine Rollobahn befestigt ist. Die andere Kante ist an einem Zugstab gefesselt, der endseitig in Führungsschienen geführt ist. Der Abstand der Führungsschienen ändert sich in Bewegungsrichtung der Rollobahn gesehen sehr stark, weshalb der Zugstab teleskopartig längenveränderlich ist. Er setzt sich aus einem Mittelstück und zwei Endstücken zusammen, wobei mit Hilfe einer Zentriereinrichtung dafür gesorgt wird, dass das Mittelstück immer zentriert gegenüber den Endstücken bleibt.

## Beschreibung

Moderne Karosserieformen zeichnen sich durch verhältnismäßig große Fensterflächen aus. Die großen Fensterflächen führen wegen der starken Sonneneinstrahlung zu einer erheblichen Aufheizung des Fahrzeuginneren, und bei Fahrzeugen mit Klimaanlagen bedeutet die starke Aufheizung einen nicht unbeträchtlichen Energieverbrauch, um der Fahrzeugaufheizung entgegenzuwirken.

Die Kraftfahrzeuge werden deswegen in zunehmendem Maße mit Fensterrollos ausgerüstet.

Hierzu ist es bekannt, seitlich neben dem Heckfenster zwei Führungsschienen anzubringen, in denen der Zugstab der Rollobahn endseitig geführt ist. Der Zugstab ist längenverstellbar, um der unterschiedlichen Fensterbreite folgen zu können. Die Betätigung geschieht durch die in den Führungsschienen laufende Schubglieder.

Ausgehend hiervon ist es Aufgabe der Erfindung, ein Fensterrollo der oben genannten Art mit einer verbesserten Anbringung der Führungsschienen zu schaffen.

Diese Aufgabe wird erfindungsgemäß durch das Fensterrollo mit den Merkmalen des Anspruches 1 gelöst.

Das erfindungsgemäße Fensterrollo ist mit einer Zentriereinrichtung versehen, die dafür sorgt, dass das Mittelstück des Zugstabs weitgehend zentriert bleibt.

Als Zentriereinrichtung wird ein Getriebe verwendet, das nach dem Prinzip des Differenzialgetriebes arbeitet.

Durch das Differenzialgetriebe wird die Bewegung eines Endstücks bezüglich des Mittelstücks auf das andere Endstück gegensinnig übertragen, wobei der Verschiebehub betragsmäßig gleich dem Verschiebehub des erstgenannten Endstücks ist. Die beiden Endstücke werden, gleichgültig welches betätigt wird, auf diese Weise gegensinnig um den gleichen Betrag gegenüber dem Mittelstück hin und her geschoben. Dies hat umgekehrt eine zwangsläufige Zentrierung des Mittelstücks zur Folge, wenn sich die Endstücke relativ zueinander zu bewegen.

Das Differenzialgetriebe kann formschlüssig arbeiten oder auch reibschlüssig. Die reibschlüssige Ausführungsform arbeitet unter Umständen nicht so genau wie die formschlüssige Anordnung, läßt sich aber etwas einfacher montieren.

In jedem Fall ist es vorteilhaft, wenn das Mittelstück von einem Rohr, vorzugsweise von einem Profilrohr gebildet ist, weil die Endstücke im Profilrohr drehgesichert verschieblich sind. Das Profilrohr hält die Rollobahn von der Zentriereinrichtung getrennt und schützt gleichzeitig die Zentriereinrichtung.

Die Führungsmittel sind zweckmäßigerweise Führungsschienen, die eine Führungsnut enthalten. Gleichwohl ist die erfindungsgemäße Lösung auch bei Fensterrollos anzuwenden, bei denen Zugstab auf stangenförmigen Führungsschienen läuft und endseitig Ösen aufweist.

Zum Bewegen der Rollobahn sind bevorzugt ein Federmotor und ein Elektromotor vorgesehen. Weiter bevorzugt sitzt der Federmotor in der Wickelwelle, während der Elektromotor den Zugstab antreibt. Mit dieser Anordnung wird die Rollobahn zwangsläufig und ohne größeren Aufwand zwischen der Wickelwelle und dem Zugstab gespannt gehalten. Gleichwohl ist auch die andere Antriebsweise denkbar, bei der mit Hilfe von Federn der Zugstab in Richtung auf die ausgefahrene Stellung vorgespannt ist, während die Wickelwelle durch den Elektromotor angetrieben ist.

Die Rollobahn selber besteht vorzugsweise aus einem Gewirk oder einer gelochten und eingefärbten Kunststofffolie.

Im übrigen sind Weiterbildungen der Erfindung Gegenstand von Unteransprüchen.

In der Zeichnung sind Ausführungsbeispiele des Gegenstandes der Erfindung dargestellt. Es zeigen:
- Fig. 1: einen Pkw in einer Rückansicht, unter Veranschaulichung eines erfindungsgemäßen ausgezogenen Heckscheibenrollos,
- Fig. 2: den prinzipiellen Aufbau des Heckscheibenrollos nach Fig. 1,
- Fig. 3: die Führungsschiene des Heckscheibenrollos nach Fig. 1, in einem Querschnitt,
- Fig. 4: den Zugstab des Heckscheibenrollos in einer perspektivischen Schnittdarstellung,
- Fig. 5: den Zugstab nach Fig. 4 im Querschnitt, geschnitten auf der Achse des Ritzels, und
- Fig. 6: den Antrieb des Heckscheibenrollos nach Fig. 1, in einer einfachen schematisierten Darstellung.

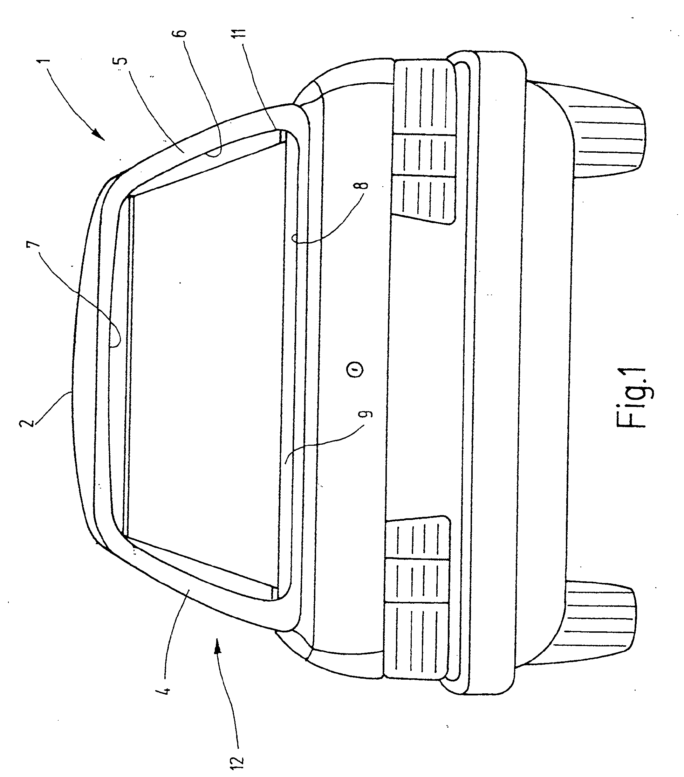

Fig. 1 zeigt in einer schematischen Darstellung die Rückansicht eines Pkw 1 mit einem Dach 2, einem Kofferraum 3 sowie zwei C-Säulen 4 und 5. Zwischen den beiden C-Säulen 4 und 5 befindet sich eine Heckfensteröffnung 6, die nach oben von einer Dachhinterkante 7 und nach unten von einer Fensterbrüstung 8 grenzen. In der Heckfensteröffnung 6 sitzt in bekannter Weise, beispielsweise mittels Fenstergummi eingeklebt, eine Heckscheibe.

Im Inneren des Pkw 1 befindet sich vor der Innenseite der Heckscheibe eine Hutablage 9, die sich zwischen der Fensterunterkante 8 und einer in der Figur nicht erkennbaren Rücksitzlehne horizontal erstreckt. In der Hutablage 9 verläuft ein gerader Auslaufschlitz 11.

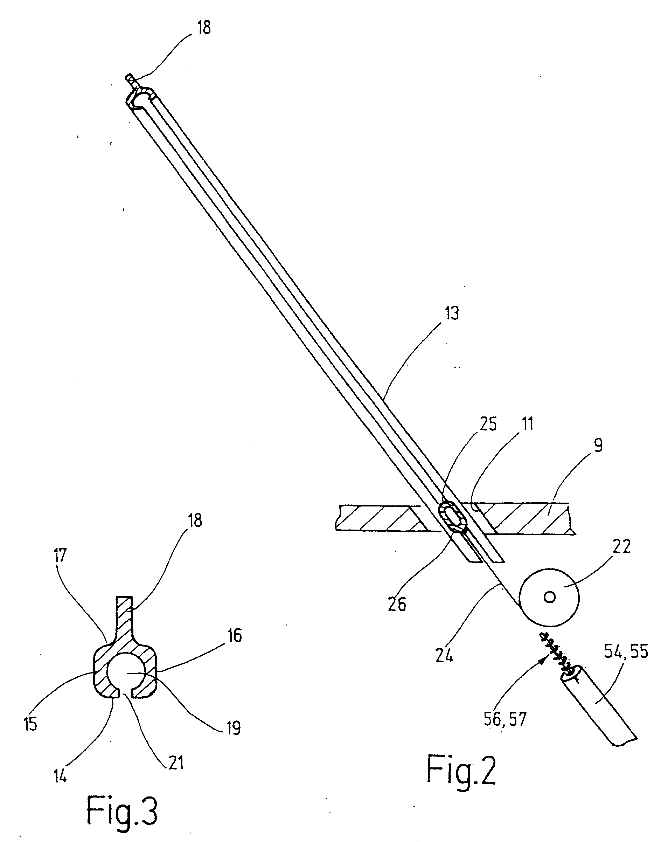

Der Auslaufschlitz 11 gehört zu einem Heckfensterrollo 12, dessen prinzipieller Aufbau in Fig. 2 stark schematisiert in einer Seitenansicht veranschaulicht ist.

Das Heckfensterrollo 12 weist zwei Führungsschienen 13 auf, die neben den seitlichen Rändern der Heckfensteröffnung 7 an den beiden C-Säulen 4 und 5 befestigt ist. Wegen der aufgeschnittenen Prinzipdarstellung ist in Fig. 2 lediglich eine Führungsschiene 13 zu erkennen, die beispielsweise an der C-Säule 5 befestigt ist.

Die Führungsschiene 13 weist das in Figur 3 gezeigte Querschnittsprofil auf. Sie ist im Querschnitt im Wesentlichen quadratisch mit abgerundeten Ecken und wird von einer Vorderseite 14, zwei seitlichen Wänden 15 und 16 sowie einer Rückseite 17 begrenzt. Von der Rückseite 17 geht ein leistenartiger Befestigungsflansch 18 aus, mit dessen Hilfe die Führungsschiene 13 an entsprechenden Karosserieteilen zu befestigen ist.

In der Führungsschiene 13 ist eine im Querschnitt kreisförmige Führungsnut 19 enthalten, die sich über einen Schlitz 21 zu der Vorderseite 14 hin öffnet.

Die Führungsschiene 13 besteht beispielsweise aus einem Aluminiumstrangpressprofil.

Da der Schlitz 21 schmäler ist als der Durchmesser des kreisförmigen Abschnitts der Führungsnut 19, entsteht eine hinterschnittene Nut, die geeignet ist ein linienförmiges Schubglied gegen Ausknicken zu schützen und das Schubglied bei entsprechendem Durchmesser daran zu hindern, durch den Schlitz 21 nach außen auszutreten.

Die Führungsschienen 13 sind bzgl. mehrerer Achsen gebogen, damit sie der Kontur der Fensterkante folgen ohne in dem Fenster selbst sichtbar zu werden. Die Führungsschienen 13 sind so angeordnet, dass die Nuten 19 sich in Richtung aufeinander zu öffnen.

Die Führungsschienen 13 reichen nach unten, wie Figur 2 erkennen läßt, durch den Schlitz 11 bis unterhalb der Hutablage 9.

Unterhalb der Hutablage 9 ist, wie Figur 2 schematisch zeigt, eine Wickelwelle 22 drehbar gelagert. Die Lagereinrichtungen sind nicht veranschaulicht, weil sie für das Verständnis der Erfindung nicht erforderlich sind.

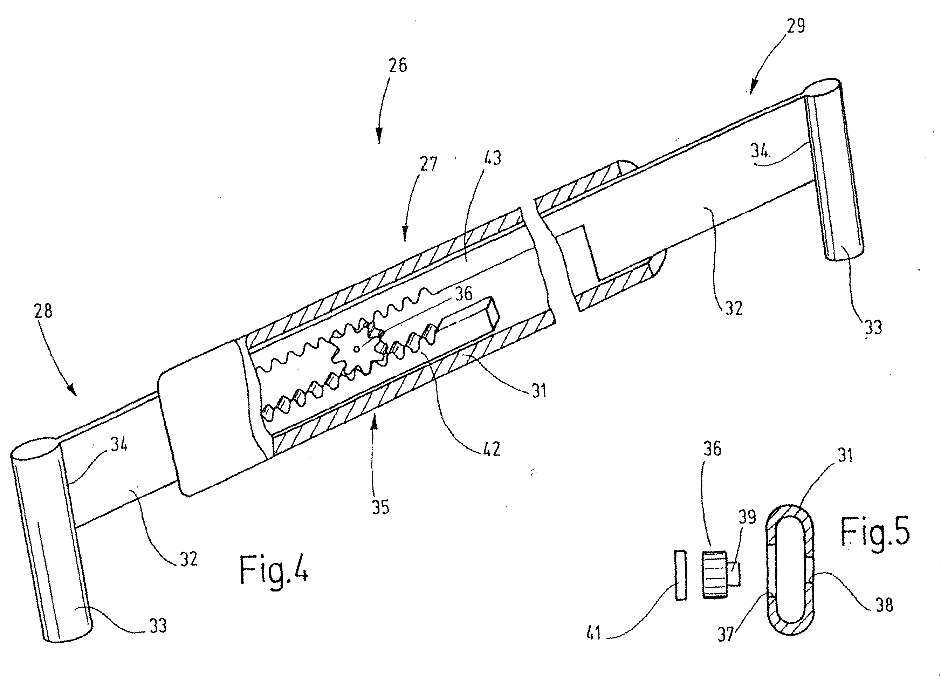

Die Wickelwelle 22 ist rohrförmig und beherbergt einen Federmotor 23, der in Fig. 5 schematisiert dargestellt ist. Der Federmotor 23 besteht aus einer Schraubenfeder, die mit einem Ende im Inneren der Wickelwelle 22 festgelegt ist und anderenends an einem der nicht veranschaulichten Lagerböcke zum Lagern der Wickelwelle 22 verankert ist.

An der Wickelwelle 22 ist mit einer Kante eine Rollobahn 24 befestigt, deren Zuschnitt eine trapezförmige Annäherung der Kontur des Heckfensters 6 ist. Die von der Wickelwelle 22 abliegende Kante ist zu einer schlauchförmigen Schlaufe 25 geformt, in der ein Zugstab 26 sitzt. Der Zugstab 26 ist in Fig. 4 im Einzelnen gezeigt.

Zu dem Zugstab 26 gehören im Wesentlichen ein Mittelstück 27 sowie zwei gegenüber dem Mittelstück 27 teleskopartig bewegliche Endstücke 28 und 29.

Das Mittelstück 27 ist ein ovales Rohr 31 mit einem konstanten Querschnitt, jeweils über die Länge gesehen. Die Länge des Rohres 31 entspricht der Länge der schlauchförmigen Schlaufe 25 und damit der entsprechenden Kante der Rollobahn 24.

Das Endstück 28 hat eine L-förmige Gestalt und setzt sich aus einem Arm 32 und einem Führungsstück 33 zusammen. Der Arm 32 hat einen solchen Querschnitt, dass er in dem Innenraum des Rohres 31 weitgehend spielfrei längsverschieblich ist. Sein außenliegendes Ende geht bei 34 einstückig in das Führungsstück 33 über, das im Querschnitt an den kreisförmigen Teil der Führungsnut 19 angepasst ist, während die Breite des Armes 32 der Weite des Schlitzes 21 entspricht.

Die beiden Endstücke 28 und 29 sind hinsichtlich des Armes 32 und des Führungsstücks 33 gleich gestaltet.

Etwa in der Mitte des Rohres 31 befindet sich eine Zentriereinrichtung 35 in Gestalt eines Differenzialgetriebes. Zu der Zentriereinrichtung 35 gehört ein Ritzel 36, das um eine Achse frei drehbar ist, die auf der großen Achse des Profilquerschnitts des Rohres 31 senkrecht steht.

Am Ort des Ritzels 36 enthält das Rohr 31 zwei miteinander fluchtende Bohrungen 37 und 38. Die Bohrung 37 ist etwas größer als es dem Kopfkreis oder Außendurchmessers des Ritzels 36 entspricht, während die damit fluchtende Bohrung 38 in der gegenüberliegenden Seitenwand des Rohres 31 auf einen Achszapfen 39 abgestimmt ist, der einstückiger Bestandteil des Ritzels 36 ist und wie gezeigt von dem Ritzel 36 ausgeht. Die Breite des Ritzels 36 entspricht der lichten Weite des Rohres 31.

Im montierten Zustand liegt der Achszapfen 39 frei drehbar mit geringem Spiel in der Bohrung 38. Zu diesem Zweck wurde das Ritzel 36 mit dem Achszapfen 39 voraus durch die Bohrung 37 eingeführt. Nach dem Einstecken des Ritzels 36 wird die Bohrung 37 durch einen eingepressten scheibenförmigen Deckel 41 verschlossen.

Die Zentriereinrichtung 35 umfasst ferner zwei Zahnstangen 42 und 43, die kämmend mit dem Ritzel 36 in Eingriff stehen. Die eine der beiden Zahnstangen verläuft wie gezeigt unterhalb des Ritzels 36, während die andere Zahnstange 43 darüber in dem Rohr 31 geführt ist. Die Zahnstange 43 geht an einem Ende wie gezeigt einstückig in den Arm 32 des Endstücks 29 über, während die andere Zahnstange 42 in sinngemäß der gleichen Weise einstückig in dem Arm 32 des Endstücks 28 übergeht.

Die Funktions- und Arbeitsweise der Zentriereinrichtung 35 ist leicht zu erkennen:

Wenn sich das Endstück 29 gegenüber dem Rohr 31 in Längsrichtung verschiebt, wird über die Zahnstange 43 das Ritzel 36 in Umdrehungen versetzt. Die Rotation überträgt die Bewegung der Zahnstange 42 gegensinnig auf die Zahnstange 42, wodurch die Zahnstange 42 um denselben Betrag jedoch gegensinnig verschoben wird. Die Folge hiervon ist, dass das Endstück 28 gegenüber dem Mittelstück 35 eine Bewegung vollführt, die den gleichen Hub hat, wie die Bewegung des Endstücks 29 jedoch die entgegengesetzte Richtung. Wenn also im Ausgangszustand das Mittelstück 35 exakt zentriert zwischen den beiden Führungsstücken 33 sitzt, wird diese exakte Zentrierung auch beibehalten, wenn eines der beiden Endstücke 28 oder 29 verschoben wird. Umgekehrt bleibt die Zentrierung des Mittelstücks 35 auch erhalten, wenn durch von außen wirkende Kräfte die beiden Endstücke 28 und 29 aufeinander zu oder voneinander weg bewegt werden.

Es versteht sich, dass die Länge der Zahnstangen 42, 43 dem erforderlichen Hub entspricht und der von Zahnstangen freie Teil der Arme 32 so bemessen ist, dass eine ausreichende teleskopartige Führung in dem Rohr 31 gewährleistet ist, die über den gesamten betriebsmäßigen Hub klemmfrei ist.

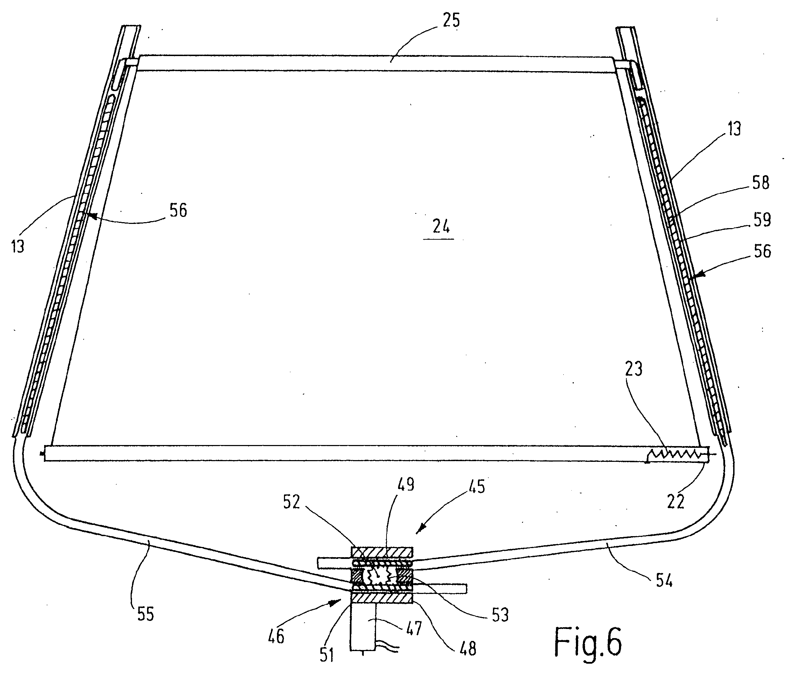

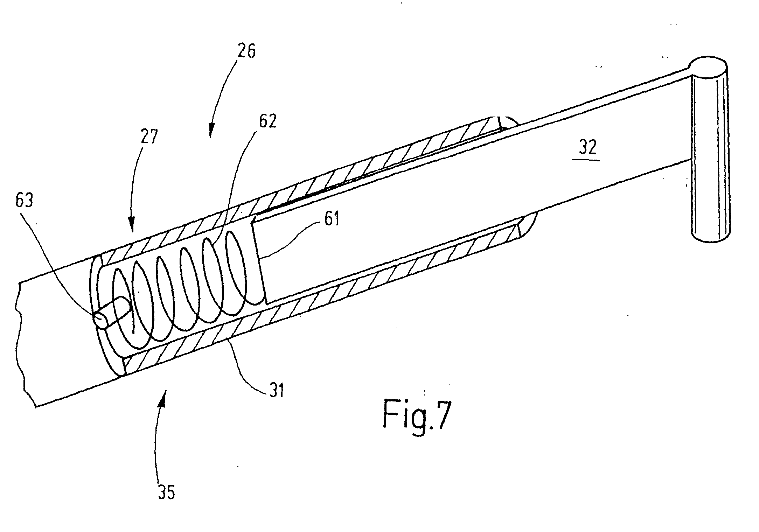

Vollständigkeitshalber wird anhand von Figur 6 noch der vollständige Aufbau und Betrieb des Fensterrollos 12 erläutert.

Um die Rollobahn 24 auszufahren ist eine Antriebseinrichtung 45 vorgesehen, die in Figur 6 stark schematisiert gezeigt ist. Zur Vereinfachung der Darstellung und zur Erläuterung des Verständnisses der Erfindung sind die beiden seitlichen Führungsschienen 13 in Figur 6 geschnitten gezeigt. Die beiden Führungsnuten 19 öffnen sich in Richtung aufeinander zu.

Zu der Antriebseinrichtung 45 gehört ein Getriebemotor 46, der sich aus einem permanent erregten Gleichstrommotor 47 und einem Getriebegehäuse 48 zusammensetzt. In dem Getriebegehäuse sind parallel zueinander zwei Führungskanäle 49 und 51 enthalten, zwischen denen auf einer Ausgangswelle 52 ein Ausgangszahnrad 53 vorgesehen ist. Das Ausgangszahnrad 53 kann über die damit drehfest verbundene Ausgangswelle 52 wahlweise in beiden Drehrichtungen in Gang gesetzt werden.

Von dem Führungskanal 49 geht ein Führungsrohr 54 zu dem unteren Ende der Führungsnut 19 in der rechten Führungsschiene 13. Der Führungskanal 51 ist am linken Ende über ein Führungsrohr 55 mit dem unteren Ende der Führungsnut 19 in der linken Führungsschiene 13 verbunden.

Sowohl durch den Führungskanal 49 als auch durch den Führungskanal 51 verläuft jeweils ein biegeelastisches Schubglied 56 bzw. 57. Der jeweils nicht benutzte Teil der Schubglieder 56, 57 wird in Speicherrohre zurückgeschoben, die von dem jeweils anderen Ende der Führungskanäle 49, 51 ausgehen.

Die beiden Schubglieder 56 und 57 haben denselben Aufbau. Sie bestehen jeweils aus einer elastisch biegsamen Seele 58, die auf ihrer Außenseite eine oder mehrere Rippen 59 trägt, die dort ein ein- oder mehrgängiges Gewinde bilden. Die Rippen 59 stehen radial vor und laufen schraubenförmig über die zylindrische Seele 58 von einem Ende des Schubglieds bis zum anderen Ende. Das Ausgangszahnrad 53 trägt eine Verzahnung, die zwischen die von den Rippen 59 gebildeten Nuten eingreifen kann. Auf diese Weise ist das Ausgangszahnrad 53 formschlüssig mit den Schubgliedern 56 und 57 gekuppelt.

Die Funktionsweise des beschriebenen Heckfensterrollos ist wie folgt:

In der Ruhestellung ist unter der Wirkung des Federmotors 23 die Wickelwelle 22 in eine Stellung gedreht, in der die Rollobahn 24 aufgewickelt ist. In dieser Stellung befindet sich die schlauchartige Schlaufe 25 in dem Auslaufschlitz 11, wie dies Figur 2 erkennen läßt. Die Zugstange 26 mit den Führungsstücken 33 liegt in der Nähe der unteren Enden der beiden Führungsschienen 13, ohne dass jedoch die Führungsstücke 33 aus den zugehörigen Führungsnuten 19 freigekommen sind.

Gleichzeitig sind die beiden Schubglieder 56 und 57 mit ihren beiden Enden von den betreffenden Führungsstücken 33 beabstandet.

Wenn der Benutzer ausgehend von dieser Stellung des Heckfensterrollos 12, in der der Lichteintritt in das Fahrzeuginnere überhaupt nicht beeinflusst wird, eine Abschattungswirkung erzeugen möchte, fährt er die Rollobahn 24 aus. Die Rollobahn 24 vermindert den Lichtdurchtritt ohne ihn vollständig zu unterbinden. Hierzu besteht die Rollobahn 24 beispielsweise aus einem offenen Kettengewirk oder einer gelochten und schwarz eingefärbten Kunststofffolie.

Um die Rollobahn 24 auszufahren, wird der Getriebemotor 46 mit einer solchen Drehrichtung in Gang gesetzt, dass er das Schubglied 58 nach rechts durch in die Führungsnut 19 bewegt. Da die beiden Schubglieder 57 und 58 an diametral gegenüberliegenden Seiten mit dem Ausgangszahnrad 53 kämmen, wird gleichzeitig das Schubglied 57 nach links durch die Führungsnut 19 der linken Führungsschiene 13 vorgeschoben. Nach einem kurzen Stück des Vorschubwegs kommen die freien Enden der beiden Schubglieder 56 und 57 mit den unteren Enden der Schenkel 42 der beiden Führungsglieder 38 und 39 in Eingriff und schieben im weiteren Verlauf die Führungsglieder 38 und 39 in Richtung auf das obere Ende der beiden Führungsschienen 13.

Da sich der Abstand zwischen den Führungsschienen 13 verändert, tauchen gleichzeitig teleskopartig die Arme 32 der Endstücke 28, 29 in das in der Schlaufe 25 enthaltene Rohr 31 des Zugstabs 26 ein. Wegen der Zentriereinrichtung 35 bleibt die zentrierte Lage des Mittelstücks 27 erhalten. Die Rollobahn 24 zeigt keine Wellenbildung, weil keine Querkräfte in der Rollobahn auftreten können.

Sobald die Endlage erreicht ist, wird der Getriebemotor 46 stillgesetzt. Die ausgefahrene Endlage ist in Fig. 6 gezeigt.

Der Getriebemotor 46 ist selbsthaltend und arretiert die Schubglieder 56 und 57 in der jeweils erreichten Stellung.

Das Abschalten des Getriebemotors 46 erfolgt mit Hilfe von Endschaltern oder indem die Führungsstücke 33 an Anschläge anlaufen, so dass ein in einer Elektronik auszuwertender Blockierstrom auftritt, der zum Abschalten führt.

Die Rollobahn 24 wird nunmehr zwischen dem Zugstab 26 und der Wickelwelle 23 aufgespannt gehalten.

Zum Einfahren wird der Getriebemotor 46 mit der entgegengesetzten Drehrichtung in Gang gesetzt, so dass die beiden Schubglieder 57 und 58 nach unten aus den zugehörigen Führungsschienen 13 heraus bewegt werden. Gleichzeitig läuft der Zugstab 26 mit nach unten, weil durch die Wirkung des Federmotors 34 der Wickelwelle 23 die Rollobahn 24 ständig unter Spannung gehalten wird.

Ein Fensterrollo für Kraftfahrzeuge weist eine drehbar gelagerte Wickelwelle auf, an der mit einer Kante eine Rollobahn befestigt ist. Die andere Kante ist an einem Zugstab gefesselt, der endseitig in Führungsschienen geführt ist. Der Abstand der Führungsschienen ändert sich in Bewegungsrichtung der Rollobahn gesehen sehr stark, weshalb der Zugstab teleskopartig längenveränderlich ist. Er setzt sich aus einem Mittelstück und zwei Endstücken zusammen, wobei mit Hilfe einer Zentriereinrichtung dafür gesorgt wird, dass das Mittelstück immer zentriert gegenüber den Endstücken bleibt.

## Patentansprüche

1. Heckfensterrollo (12) zum Regulieren des Lichteintritts durch ein zwischen C-Säulen eines Kraftfahrzeugs angeordneten Heckfenster,
mit wenigstens einer Wickelwelle (22), die drehbar gelagert ist,
mit wenigstens einer Rollobahn (24), die mit einer Kante an der Wickelwelle (22) befestigt ist,
mit wenigsten einem Paar von Führungsschienen (13), von denen sich jede seitlich neben der aufgespannten Rollobahn (22) erstreckt, von denen jede jeweils wenigsten eine Führungsnut (19) enthält und die an den beiden C-Säulen (4,5) befestigt sind,
mit einem längenveränderlichen Zugstab (26), der mit einer von der Wickelwelle (22) abliegenden Kante verbunden ist und der sich aus einem Mittelstück (27) und zwei Endstücken (28,29) zusammensetzt, von denen die Endstücke (28,29) in den Führungsnuten (19) geführt sind, mit einer Zentriereinrichtung (35), die das Mittelstück (27) bezüglich der Endstücke (28,29) zumindest angenähert zentriert und
mit einer Antriebseinrichtung (45) zum Bewegen des Zugstabs (26) längs der Führungsschienen (13) und zum Drehen der Wickelwelle (22).

2. Fensterrollo nach Anspruch 1, **dadurch gekennzeichnet, dass** das Mittelstück (27) von einem Rohr (31) gebildet ist.

3. Fensterrollo nach Anspruch 1, **dadurch gekennzeichnet, dass** das Rohr (31) ein Profilrohr ist.

4. Fensterrollo nach Anspruch 1, **dadurch gekennzeichnet, dass** die Endstücke (28,29) in dem Mittelstück (27) teleskopartig geführt sind.

5. Fensterrollo nach Anspruch 1, **dadurch gekennzeichnet, dass** die Führungsnuten (19) seitlich der aufgespannten Rollobahn (24) verlaufen.

6. Fensterrollo nach Anspruch 7, **dadurch gekennzeichnet, dass** die Führungsnuten (19) hinterschnittene Führungsnuten sind.

7. Fensterrollo nach Anspruch 1, **dadurch gekennzeichnet, dass** der Wickelwelle (22) ein Federmotor (23) zugeordnet ist, der die Wickelwelle (22) im Aufwickelsinn vorspannt.

8. Fensterrollo nach Anspruch 1, **dadurch gekennzeichnet, dass** die Antriebseinrichtung (54) zum Bewegen des Zugstabs zwei Antriebsglieder umfasst.

9. Fensterrollo nach Anspruch 1, **dadurch gekennzeichnet, dass** die Antriebseinrichtung (45) einen Getriebemotor (46) umfasst.

10. Fensterrollo nach Anspruch 10, **dadurch gekennzeichnet, dass** die Antriebsglieder biegsame linienförmige Schubglieder (56,57) sind, die knicksicher zwischen dem Getriebemotor (46) und der betreffenden Führungsnut (19) geführt sind.

11. Fensterrollo nach Anspruch 12, **dadurch gekennzeichnet, dass** die Antriebsglieder angenähert zylindrische Gebilde sind, die mit einer Verzahnung (59) auf der Außenseite versehen sind, die über die Länge mit konstanter Teilung durchläuft.

12. Fensterrollo nach Anspruch 13, **dadurch gekennzeichnet, dass** die Verzahnung (59) von einer auf der Außenseite schraubenförmig verlaufenden Rippe gebildet ist.

13. Fensterrollo nach Anspruch 11, **dadurch gekennzeichnet, dass** die Antriebsglieder mit dem Getriebemotor (46) formschlüssig zusammenwirken.

14. Fensterrollo nach Anspruch 1, **dadurch gekennzeichnet, dass** die Rollobahn (24) aus einem Gewirk oder einer gelochten Folie besteht.
